# EUROPÄISCHE PATENTANMELDUNG

(11) **EP 0 708 158 A2**
(43) Veröffentlichungstag der Anmeldung: **24.04.1996**
(21) Anmeldenummer: 95116090.2
(22) Anmeldetag: 12.10.1995
(51) Int. Cl.: C09D 167/06, C08F 283/01, D06N 3/12, B32B 27/00, E04D 5/06

(54) **Emissionsarmes Beschichtungssystem auf Polyesterharzbasis**

(30) Priorität: 20.10.1994 DE 4437498
(71) Anmelder: BASF AKTIENGESELLSCHAFT, D-67056 Ludwigshafen (DE)
(72) Erfinder: Christoph, Hans-Juergen, Dr., D-34246 Vellmar (DE); Wolf, Bernhard, D-34246 Vellmar/Kassel (DE); Gerth, Dale, Dr., D-67346 Speyer (DE); Schwiegk, Stefan, Dr., D-67433 Neustadt (DE); Folda, Thomas, Dr., D-67435 Neustadt (DE)

(57) **Zusammenfassung**

Die Erfindung betrifft ein emissionsarmes Beschichtungssystem, enthaltend ein styrolfreies ungesättigtes Polyesterharz mit tert.-Butylstyrol als Comonomer und ein Polyestervlies, sowie gegebenenfalls übliche Zusatzstoffe.

## Beschreibung

Die Erfindung betrifft ein emissionsarmes Beschichtungssystem aus einem ungesättigten Polyesterharz (UP-Harz) und einem Polyestervlies, -gewebe oder -gelege, sowie gegebenenfalls üblichen Zusatzstoffen.

Es ist bekannt, daß man z.B. Flachdächer dadurch abdichten kann, daß man ein Beschichtungssystem aus einem UP-Harz, welches ein Polyestervlies als Verstärkungseinlage enthält, auf das Dach aufbringt und das Harz anschließend härtet. Solche Verfahren sind beispielsweise in EP-A 79 014 und EP-A 160 724 beschrieben. Die dabei verwendeten Harze enthalten meist Styrol als monomeres Verdünnungsmittel, welches insbesondere bei höheren Umgebungstemperaturen zu Geruchsbelästigungen führt. Ferner läßt in manchen Fällen die mechanische Festigkeit derartiger Beschichtungen zu wünschen übrig und ihre Wasseraufnahme ist zu hoch. Auf anderen Einsatzgebieten von UP-Harzen werden Methacrylsäureester statt Styrol eingesetzt, um emissionsarme Systeme zu erhalten. Es hat sich gezeigt, daß dies bei Dachbeschichtungssystemen nicht möglich ist, weil die Harze unvollständig aushärten und deshalb eine viel zu geringe Festigkeit und Dehnung haben. Darüber hinaus weisen sie eine klebrige Oberfläche auf.

Der Erfindung lag daher die Aufgabe zugrunde, ein emissionsarmes Beschichtungssystem bereit zustellen, welches die genannten Nachteile nicht aufweist. Diese Aufgabe wird durch Verwendung von tert.-Butylstyrol als Comonomer gelöst.

Gegenstand der Erfindung ist ein emissionsarmes Beschichtungssystem, enthaltend
A. 100 Gew.-Teile eines ungesättigten Polyesterharzes,
B. 2 bis 50 Gew.-Teile eines Polyestervlieses, -gewebes oder -geleges mit einem Flächengewicht von 20 bis 400 g·m⁻², und
C. weitere übliche Zusatzstoffe,
wobei das Harz A 10 bis 80 Gew.-% tert.-Butylstyrol enthält.

In einigen Patentveröffentlichungen ist bei der Aufzählung der geeigneten Comonomeren für UP-Harze neben Styrol und anderen substituierten Styrolen auch tert.-Butylstyrol aufgeführt. Es wird jedoch nirgends differenziert oder gar beispielhaft als geeignetes Comonomeres für emissionsarme UP-Harz-Systeme beschrieben.

Ungesättigte Polyester sind die üblichen Kondensationsprodukte aus mehrwertigen, insbesondere zweiwertigen Carbonsäuren und deren veresterbaren Derivaten, insbesondere deren Anhydriden und mehrwertigen, insbesondere zweiwertigen Alkoholen, die gegebenenfalls zusätzlich Reste einwertiger Carbonsäuren, einwertiger Alkohole oder Reste von Hydroxycarbonsäuren enthalten, wobei zumindest ein Teil der Reste über ethylenisch ungesättigte copolymerisierbare Gruppen verfügen muß.

Wenn man flexible Beschichtungen und Abdichtungen erhalten will, setzt man bevorzugt Polyester aus Adipinsäure, Maleinsäure und Neopentylglykol ein. Die Adipinsäure kann dabei teilweise oder ganz durch anderen gesättigte Dicarbonsäuren ersetzt sein, wie z.B. Phthalsäure, Isophthalsäure, Terephthalsäure oder Tetrahydrophthalsäure; das Neopentylglykol kann ganz oder teilsweise durch andere längerkettige Diole ersetzt sein, wie z.B. 1,4-Butandiol, Dipropylenglykol, Diethylenglykol, Trimethylolpropanmonoallylether, Cyclohexandimethanol, Propylenglykol oder Ethylenglykol.

Es werden bevorzugt niedermolekulare Polyester eingesetzt mit einem Molekulargewicht zwischen 400 und 5.000 insbesondere zwischen 500 und 2.500. Der Polyester wird vorzugsweise mit Diol-Überschuß hergestellt und weist eine Hydroxyzahl von vorzugsweise 20 bis 80, insbesondere von 25 bis 70 auf. Die UP-Harze werden vorzugsweise in zwei Stufen hergestellt. In der ersten Stufe wird ein gesättigter Polyester mit vorwiegend OH-Endgruppen hergestellt. In der zweiten Stufe wird dieser gleichzeitig mit dem Anhydrid einer α,β-ungesättigten Dicarbonsäure und einem aliphatischen, cycloaliphatischen oder aromatischen Diisocyanat zu einem ungesättigten Polyester, möglichst ohne OH-Endgruppen, umgesetzt und in den Monomeren gelöst.

Die UP-Harze enthalten erfindungsgemäß 10 bis 80, vorzugsweise 20 bis 50 Gew.-% tert.-Butylstyrol. Darunter sind p-tert.-Butylstyrol, m-tert.-Butylstyrol und deren Mischungen (vorzugsweise im Verhältnis 95:5) zu verstehen.

Das tert.-Butylstyrol kann auch im Gemisch mit anderen hochsiedenen Methacrylat-, Acrylat- oder Allyl-Comonomeren eingesetzt werden, insbesondere mit (Meth-)Acrylsäureestern mit einem Siedepunkt oberhalb von 100, vorzugsweise oberhalb von 150°C. Es hat sich überraschenderweise gezeigt, daß Mischungen von ungesättigten Polyesterharzen mit (Meth-)Acrylsäureestern dann rasch und vollständig aushärten, wenn sie tert.-Butylstyrol zugemischt enthalten. Durch das Zumischen von Methacrylaten erhält man Beschichtungen mit verbesserter Witterungsbeständigkeit.

Bevorzugt sind Methacrylsäureester, wie z.B. 2-Ethylhexylmethacrylat, Phenylethylmethacrylat, Tetrahydrofurfurylmethacrylat, Ethyltriglykolmethacrylat, Benzylmethacrylat, N,N-Dimethylaminoethylmethacrylat, N,N-Dimethylaminomethylmethacrylat, 1,4-Butandioldimethacrylat, Hydroxyethylmethacrylat, Hydroxypropylmethacrylat, Isobornylmethacrylat, Acetacetoxyalkylmethacrylat, 1,2-Ethandioldimethacrylat, Diethylenglykoldimethacrylat, Methoxypolyethylenglykolmonomethacrylat und Dicyclopentenyloxyethylmethacrylat.

Acrylsäureester sind weniger bevorzugt, da sie meist hautreizend sind und eine geringe Hydrolysebeständigkeit aufweisen.

Ein bevorzugtes emmissionsarmes Beschichtungssystem enthält ein UP-Harz folgender Zusammensetzung:
- mindestens 20 Gew.-%, vorzugsweise 40 bis 80 Gew.-% eines ungesättigten Polyesters
- mindestens 10 Gew.-%, vorzugsweise 10 bis 40 Gew.-% tert.-Butylstyrol,
- mindestens 5 Gew.-%, vorzugsweise 10 bis 30 Gew.-% eines oberhalb von 100°C siedenden Methacrylat-Comonomeren.

Die Beschichtungssysteme enthalten erfindungsgemäß 2 bis 50, vorzugsweise 2 bis 20 Gew.-Teile, bezogen auf das Harz, eines Polyestervlieses, -gewebes oder -gewirkes. Polyestervliese können nach bekannten Verfahren z. B. aerodynamisch, durch Krempeln oder Kardieren hergestellt werden. Bevorzugt sind Wirrfaservliese aus Stapelfasern oder Endlosfäden, die genadelt sein können oder an den Kreuzungspunkten der Fasern thermisch oder mittels eines Klebstoffs miteinander verbunden sein können. Bevorzugter Polyester ist Polyethylenterephthalat. Das Flächengewicht beträgt 20 bis 400, vorzugsweise 30 bis 250 g·m⁻².

Den erfindungsgemäßen Beschichtungssystemen können die üblichen Zusatzstoffe und Hilfsmittel zugesetzt werden, z. B. phenolische Inhibitoren in Mengen von 50 bis 500 ppm. Weitere übliche Zusatzstoffe und Hilfsmittel sind z. B. Verstärkungs- und Füllstoffe, vorzugsweise in Mengen von 5 bis 50 Gew.-Teilen, bezogen auf das Harz, wie Glasfasern, Aluminiumhydroxid, Siliciumdioxid, Kreide, Talkum und Sand; Pigmente, wie Titandioxid, Elastifiziermittel, wie Polyurethane, Polyamide oder Dienkautschuke; Flammschutzadditive, wie Decabromdiphenylether und Chlorparaffin; ferner Thixotropiermittel, Gleitmittel und Lösungsmittel. Um eine klebfreie Aushärtung zu erhalten, kann man dem Harz Paraffine und/oder Benzophenon zusetzen. Als Stabilisatoren verwendet man vorzugsweise Kupfersalze, z.B. Kupfernaphthenat, und Triphenylphosphit.

Die Harze können schließlich die üblichen Peroxidinitiatoren enthalten. Bei der bevorzugten Kalthärtung werden bei niedrigen Temperaturen wirksame Initiatorsysteme, z. B. Benzoylperoxid oder Methylethylketonperoxid in Kombination mit üblichen Beschleunigern, wie Aminen oder Kobalt-Verbindungen verwendet, wobei die Peroxide dem Harz zweckmäßigerweise erst kurz vor der Härtung zugesetzt werden sollten. Es ist auch möglich, übliche Photoinitiatoren, wie z. B. Acylphosphinoxide, Bisacylphosphinoxide, Benzilketale oder Benzoinether, zuzusetzen und die Härtung durch Licht erreichen.

Die erfindungsgemäßen Beschichtungssysteme eignen sich zum Beschichten und Abdichten von Gebäudeteilen, insbesondere von Flachdächern, aber auch von Terrassen, Brücken, Balkonen, Parkdecks, Schwimmbädern und Mauern.

Die Beschichtungssysteme werden direkt auf den Untergrund aufgebracht, indem man zunächst das Harz auf die zu beschichtende Fläche aufstreicht, das Vlies in das Harz einlegt und z.B. mittels einer Rolle die Imprägnierung durchführt. Zweckmäßigerweise wird auch von oben auf das Vlies eine zusätzliche Schicht Harz aufgebracht.

Die Aushärtung der Harze erfolgt bei lichtinitierten Harzen durch Bestrahlung mit UV-Lampen oder durch Tageslicht. Peroxidinitiierte Harze werden durch Zugabe von Aminen oder Cobaltverbindungen gehärtet.

### Beispiele

1. 2198 Gewichtsteile Adipinsäure (15,1 Mol) und 1675 Gewichtsteile Neopentylglykol (16,08 Mol) wurden in ein Reaktionsgefäß eingewogen, das mit einem Thermometer, einem ständig arbeitenden Rührwerk und einer Vorrichtung zum Einleiten eines Stickstoffstromes ausgestattet war. Die Mischung wurde unter Rühren langsam auf 200°C erhitzt und so lange dabei gehalten, bis die Säurzezahl 11,7, und die OHZ 31 betrug. Während des Abkühlens auf 140°C wurden 0,12 Gewichtsteile Hydrochinon gelöst. Bei dieser Temperatur wurden 171 Gewichtsteile Maleinsäureanhydrid zugegeben und zwei Stunden dabei gehalten. Dann wurde abgekühlt auf ca. 70°C und das Harz in 1440 Gewichtsteile tert-Butylstyrol (95 % para, 5 % meta-Substitution) gelöst.
   100 Gewichtsteile dieser Lösung (mit 30 Gew.-% tert.-Butylstyrol) wurden mit 0,4 Gewichtsteilen Paraffin, 5 Gewichtsteilen 50%iger Benzoylperoxidpaste und 5 Gewichtsteilen 10%iger Lösung von Dimethyl-p-Toluidin in NMP verrührt und das Gemisch in Gießformen der Gelierung und Aushärtung überlassen. Nach vollständiger Durchhärtung besaßen die elastischen Gießlinge klebfreie Oberflächen. Die Zugfestigkeit nach DIN 53 455 bei RT wurde zu 1,7 [MPa] bestimmt.
2. Beispiel 1 wurde wiederholt, wobei ein Harz mit 20 Gew.-% tert.-Butylstyrol und 15 Gew.-% Isobornylmethacrylat hergestellt wurde. Die Zugfestigkeit des gehärten Harzes betrug 4,4 [MPa].
3. Beispiel 1 wurde wiederholt, wobei ein Harz mit 20 Gew.-% tert.-Butylmethacrylat, 10 Gew.-% Isobornylmethacrylat und 5 Gew.-% Ethyltriglykolmethacrylat eingesetzt wurde. Die Zugfestigkeit des gehärteten Harzes betrug 3,5 [MPa].

## Patentansprüche

1. Emissionsarmes Beschichtungssystem, enthaltend
A. 100 Gew.-Teile eines ungesättigten Polyesterharzes,
B. 2 bis 50 Gew.-Teile eines Polyestervlieses, -gewebes oder -geleges mit einem Flächengewicht von 20 bis 400 g·m⁻²
C. übliche Zusatzstoffe,
dadurch gekennzeichnet, daß das Harz A 10 bis 80 Gew.-% tert.-Butylstyrol als Comonomer enthält.

2. Emissionsarmes Beschichtungssystem nach Anspruch 1, dadurch gekennzeichnet, daR das Harz ferner bis zu 70 Gew.-% eines oberhalb von 100°C siedenden Acrylat-, Methacrylat- oder Allylcomonomeren enthält.

3. Emissionsarmes Beschichtungssystem nach Anspruch 2, dadurch gekennzeichnet, daR das ungesättigte Polyesterharz folgende Zusammensetzung hat:
mindestens 40 Gew.-% eines ungesättigten Polyesters,
mindestens 10 Gew.-% tert.-Butylstyrol,
mindestens 5 Gew.-% eines oberhalb von 100°C siedenden Methacrylat-Comonomeren.

4. Emissionsarmes Beschichtungssystem nach Anspruch 1, dadurch gekennzeichnet, daß es 5 bis 50 Gew.-Teile, bezogen auf 100 Gew.-Teile Harz, eines Füllstoffs enthält.

5. Emissionsarmes Beschichtungssystem nach Anspruch 1, dadurch gekennzeichnet, daß es ein bei niedrigen Temperaturen in Radikale zerfallendes Initiatorsystem enthält.

6. Emissionsarmes Beschichtungssystem nach Anspruch 1, dadurch gekennzeichnet, daR es einen Photoinitiator enthält.

7. Verwendung des Beschichtungssystems nach Anspruch 1 zum Beschichten und Abdichten von Gebäudeteilen, insbesondere von Flachdächern.
